# FASCICULE DE BREVET EUROPEEN

(11) **EP 0 691 286 B1**
(45) Date de publication et mention de la délivrance du brevet: **22.10.1997**
(21) Numéro de dépôt: 95810448.1
(22) Date de dépôt: 06.07.1995
(51) Int. Cl.: B65F 1/00, B65F 1/14, A01G 1/12

(54) **Dispositif pour le ramassage et/ou le transport de déchets de jardin ou de produits aux propriétés similaires**
Vorrichtung zum Sammeln und/oder Transportieren von Gartenabfällen oder Produkten mit ähnlichen Eigenschaften
Device for collecting and/or transporting garden refuse or products with similar properties

(30) Priorité: 08.07.1994 CH 2191/94
(43) Date de publication de la demande: 10.01.1996
(73) Titulaire: Codefine SA, 1005 Lausanne (CH)
(72) Inventeur: Schinasi, Piero, CH-1066 Epalinges (CH); Schinasi, Madeleine, CH-1066 Epalinges (CH)
(74) Mandataire: Ganguillet, Cyril

(56) Documents cités:
- WO-A-94/06666
- GB-A- 2 153 195
- US-A- 3 312 263
- US-A- 4 173 351
- US-A- 4 955 925

## Description

La présente invention concerne un dispositif selon le préambule de la revendication 1 pour le ramassage et/ou le transport de déchets de jardin ou de produits aux propriétés similaires. Un tel dispositif est connu du document US-A-3 312 263. Le ramassage des déchets de jardin tels que feuilles mortes, petites branches, pommes de pin, gazon coupé, etc. est une tâche bien connue tant des jardiniers professionnels que des jardiniers du dimanche.

Qu'il s'agisse de l'entretien d'un jardin privé, d'un parc public ou d'un terrain de golf par exemple, le processus de nettoyage est fondamentalement le même. En effet, le jardinier nettoie une certaine surface de sa pelouse en utilisant un râteau ou un balais de jardin. Dans les parcs publics ou les terrains de golf, on utilise des tracteurs comportant un dispositif de soufflerie dont le jet d'air propulse les déchets et les repousse.

Quel que soit le moyen utilisé ou l'envergure du travail, les déchets sont finalement toujours accumulés en un tas qu'il convient alors de transporter afin que les déchets soient mis sur un composte ou soient amenés dans un lieu où ils seront brûlés.

On peut utiliser pour le transport de ces déchets des conteneurs rigides, sous forme de bennes en plastique ou de bennes métalliques, mais de tels conteneurs sont mal pratiques pour deux raisons au moins. En premier lieu, il est difficile de déplacer des chariots ou des bennes équipées de roues sur des surfaces telles que des pelouses car d'une part celles-ci peuvent être marquées par le passage de ces engins et d'autre part ces surfaces offrent une résistance au roulement. En second lieu, les déchets de jardin représentent en général un gros volume pour un faible poids, de sorte qu'il peut être frustrant de constater que le poids du conteneur est finalement supérieur à celui du contenu et que les efforts déployés à manoeuvrer les conteneurs sont en grande partie inutiles.

Pour les raisons qui précèdent, on a proposé d'utiliser, pour le ramassage et le déplacement des déchets de jardin, des dispositifs présentant pour l'essentiel deux caractéristiques communes, à savoir en premier lieu d'être réalisés dans un matériau souple tel que la toile et en second lieu de permettre un déplacement par glissement sur la surface de la pelouse, glissement comparable à celui d'un traîneau.

Une première solution proposée dans l'état de la technique consiste à utiliser un morceau de toile carrée, dont les coins sont pourvus d'oeillets et d'entasser au centre de cette surface carrée le tas de déchets pour ensuite réunir les quatre coins de la toile et former une sorte de baluchon. Une telle proposition est exposée dans la demande de brevet internationale WO-A-9 406 666.

Procédant de la même idée, on a également proposé de disposer des oeillets sur les flans de la pièce de toile de manière à pouvoir y introduire une corde qui permet à la fois de tracter le dispositif et de refermer celui-ci sur lui-même, en partie du moins. Cette proposition est exposée dans US-A-5 104 103.

Ce dernier dispositif présente un inconvénient dans la mesure où il paraît souhaitable que la surface de toile comporte des rebords sur ses côtés, cela de manière à former une sorte de cuvette plutôt qu'une simple surface plate. Ceci vaut en particulier lorsqu'il s'agit de déplacer le dispositif sur un terrain accidenté, les déchets pouvant parfaitement être entraînés à l'extérieur du dispositif. Pour remédier à cet inconvénient, il a également été proposé, notamment dans US-A-3 355 187 de munir l'un des côtés de la toile d'ourlets dans lesquels peuvent être engagées des barres de maintien rigides. De la sorte, le dispositif comporte, au moins dans la zone proche du côté équipé des barres de maintien, des bords latéraux, le dispositif ayant dans son ensemble une forme rappelant celle d'une coque de bateau.

Visant le même but, le dispositif illustré dans US-A-2 974 971 propose d'utiliser un ourlet périphérique parcourant trois côtés de la surface de la toile, ourlet dans lequel est engagée une corde qui, une fois tendue, est censée relever les bords de la toile et constituer des parois latérales permettant de contenir le tas de déchets qui a évidemment tendance à se répandre comme on l'a déjà dit.

Pour éviter que le contenu du dispositif se répande sur le sol lors de la manoeuvre ou à cause du vent, on a proposé, dans US-A-3 312 263 un sac sous forme d'enveloppe comportant une partie inférieure destinée à glisser sur le sol et une partie supérieure, pouvant être partiellement ouverte, ou fermée, selon les besoins. Ce dispositif est muni de bretelles de halage. Si, comme les autres dispositifs connus, cette proposition permet à l'utilisateur de faire glisser le dispositif sur le sol comme un traîneau, cette proposition ne comporte aucun élément structurel permettant, ou à tout le moins facilitant, le transport du dispositif une fois rempli.

Un avantage commun à tous les dispositifs mentionnés plus haut est que, lorsque le jardinier les laisse en position plane, c'est à dire sans faire intervenir un organe permettant de créer des rebords latéraux, il est possible de charger la toile en ratissant ou en repoussant les déchets vers le centre de celle-ci. Les divers dispositifs selon l'art antérieur permettent certainement de tracter un tas de déchets d'un point à l'autre de la surface de la pelouse, mais ces dispositifs sont mal pratiques s'il s'agit d'emporter les déchets et non simplement de les déplacer à même le sol en faisant glisser le dispositif comme un traîneau.

De plus, les jardiniers du dimanche doivent en général amener leurs déchets de jardin dans un lieu prévu à cet effet. La plupart d'entre eux utilisent leur propre véhicule pour transporter les déchets de jardin et il leur est difficile, voire même impossible, d'entreposer un conteneur rigide de taille utile dans leur véhicule.

Le but de la présente invention est de proposer un dispositif pour le ramassage et/ou le transport de déchets de jardin ou de produits aux propriétés similaires, qui présente les mêmes avantages que les dispositifs précédemment connus, à savoir de pouvoir être tiré à même le sol comme un traîneau et d'être réalisé dans un matériau souple tel que la toile, mais qui présente également l'avantage de pouvoir être refermé de manière à former un sac qui puisse être aisément transporté, notamment au moyen d'un véhicule.

A cet effet, le dispositif pour le ramassage et/ou le transport de déchets de jardin ou de produits aux propriétés similaires selon l'invention est décrit à la revendication 1.

On décrit ci-après, à titre d'exemple, deux variantes d'exécution du dispositif selon l'invention, en se référant au dessin où:
la figure 1 est une vue schématique en perspective du dispositif pour le ramassage et/ou le transport de déchets de jardin ou de produits aux propriétés similaires, selon la première variante d'exécution;
la figure 2 est une vue schématique en perspective du dispositif selon la deuxième variante d'exécution;
la figure 3 est une vue en perspective d'un exemple de dispositif selon la deuxième variante de l'invention, illustré en position entièrement déployée;
la figure 4 illustre un premier mode de chargement du dispositif selon la deuxième variante d'exécution;
les figures 5 et 6 illustrent un deuxième mode de chargement, puis de remplissage du dispositif selon la première et/ou la deuxième variante d'exécution de l'invention;
la figure 7 illustre mode de remplissage du dispositif selon la première et/ou la deuxième variante d'exécution de l'invention;
les figure 8 et 9 présentent des vues en perspective du dispositif une fois refermé.

Avant d'aborder la description des figures, il convient de préciser que l'on décrit ci-après le matériau utilisé pour réaliser le dispositif comme étant une toile. La toile est sans doute le matériau qui convient le mieux à la réalisation du dispositif, mais cela ne signifie nullement que d'autres matériaux, notamment synthétiques ou en matière plastique ne conviendraient pas. Tout au contraire, de tels matériaux peuvent présenter des avantages notamment sur le plan du compromis entre la rigidité et la souplesse souhaitables, compromis qui est variable selon les applications du dispositif et selon les dimensions dans lesquelles il est réalisé. On entend donc ci-après par toile, tout matériau dont les propriétés conviennent pour réaliser le dispositif et atteindre le but de l'invention.

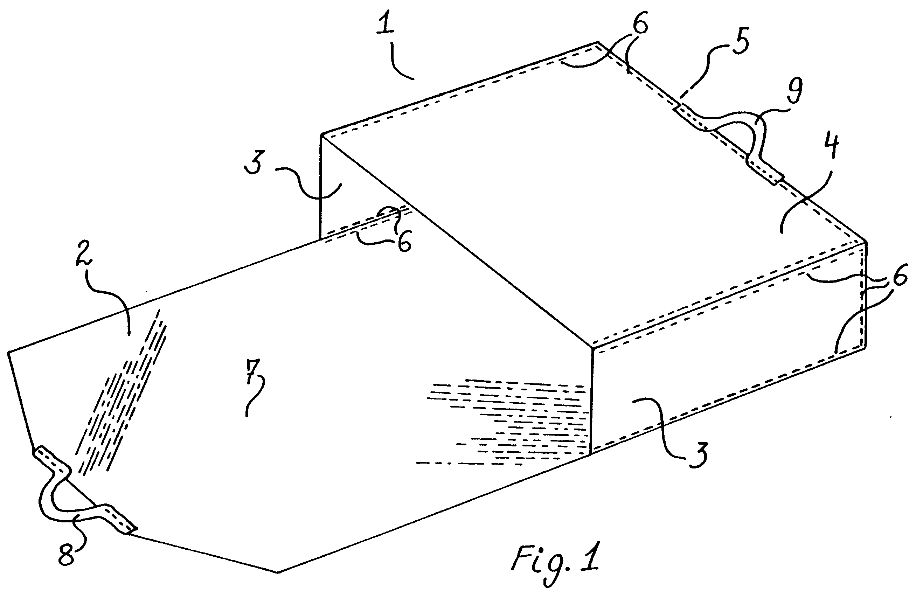

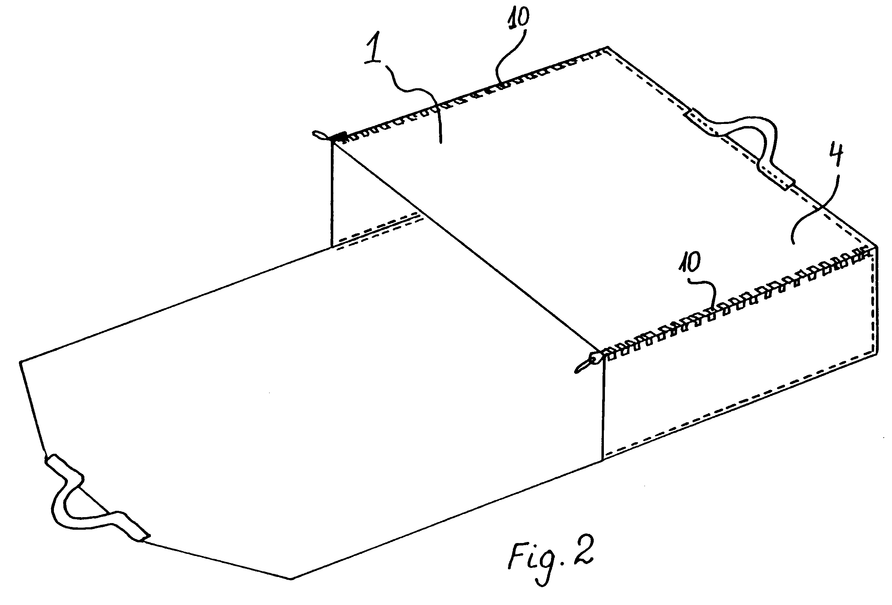

Sur la figure 1, on peut voir que le dispositif 1 se compose d'une pièce inférieure 2 en toile qui reposera sur le sol lorsque le dispositif sera déployé dans sa position de travail. On reconnaît également deux pièces de toile latérales 3 qui forment les côtés du dispositif; une pièce supérieure 4, également en toile et finalement le fond 5 du dispositif, également constitué d'une pièce de toile, mais non visible sur la figure 1. La figure 1, ainsi que la figure 2, présentent le dispositif de façon schématique car, bien que la toile utilisée soit particulièrement résistante, qu'elle ait donc une certaine rigidité ou consistance, il est bien évident qu'un dispositif constitué de pièces de toile ne peut pas garder de lui-même une configuration aussi rigide et géométrique que celle illustrée aux figures 1 et 2. Néanmoins, pour la compréhension de l'invention il a été jugé préférable d'illustrer le dispositif et ses variantes de cette façon.

Les diverses pièces constituant le dispositif sont assemblées, par exemple au moyen de coutures 6. Les coutures sont préférablement réalisées à l'intérieur du dispositif, non seulement pour des motifs esthétiques, mais surtout pour accentuer leur rigidité.

La pièce de toile inférieure 2 joue un rôle différent de celui des autres pièces constituant le dispositif. En effet, cette pièce inférieure 2 sera à la fois en contact avec le sol et avec le tas de déchets de jardin que l'on pourra accumuler sur la partie rabattable 7 de la pièce inférieure 2. La toile utilisée pour la pièce inférieure 2 sera préférablement choisie de manière à offrir une surface glissante. D'une part pour que la face tournée vers le sol glisse sur la pelouse et que le dispositif puisse être traîné, par exemple en le tirant par une poignée 8. D'autre part, lorsqu'un tas de déchets est accumulé sur la partie rabattable 7, il est également avantageux que la surface supérieure de la pièce 2 soit aussi glissante de manière à favoriser le glissement du tas de déchets vers l'intérieur du dispositif.

Pour ce qui concerne les quatre autres pièces de toile 3, 4 et 5 constituant le dispositif, on recourra préférablement à une toile au touché plus grossier qui, bien que souple, pourra néanmoins avoir une certaine rigidité qui contribuera à maintenir le dispositif dans une position semi-ouverte.

Grâce au fait que le dispositif est réalisé au moyen de diverses pièces, il est possible de confectionner ces pièces dans des toiles différentes, plus ou moins lourdes et résistantes. Un dispositif destiné au jardinage privé pourra être réalisé en tout ou partie dans une toile plus légère que celle qu'on choisira pour une utilisation plus musclée, ce qui est le cas lorsque le dispositif doit par exemple être tracté par un véhicule.

On pourra donc réaliser la pièce inférieure, qui est la plus sollicitée tant en traction qu'en frottement, dans une toile de polypropylène tissé et laminé de 230 grammes par mètre carré. Cette même toile peut aussi être utilisée pour confectionner les pièces latérales 3 et le fond 5. En revanche, on peut parfaitement utiliser une toile de polypropylène tissé laminé de 100 grammes par mètre carré pour réaliser la pièce supérieure 4. L'utilisation de toile plus légère conduit bien sûr à une diminution du coût de fabrication du dispositif. Les données chiffrées ci-dessus sont des exemples donnés pour fixer les idées, mais ne constituent nullement des limitations ni supérieure ni inférieure.

Les poignées de traction 8 et 9 peuvent être réalisées au moyen de bandes de tissu dont les extrémités sont cousues aux pièces du dispositif de manière à ce que le milieu de la bande forme une anse.

Il est important de constater que le dispositif est conformé de manière que lorsqu'il est tiré sur le sol comme un traîneau, la traction s'applique uniquement à la toile, par la poignée. En revanche, aucun autre organe, tel qu'une corde, ne doit intervenir. Cette traction par la toile elle-même constitue un avantage appréciable par rapport aux solutions connues, d'une part par sa simplicité, le dispositif pouvant être tracté tel qu'il est, et d'autre part parce que les contraintes étant réparties, le dispositif peut être tracté sans se déformer notablement.

En ce qui concerne les dimensions de chacune des pièces du dispositif, il convient de préciser d'emblée que, pour peu que l'on respecte la cohérence des dimensions les unes par rapport aux autres, on aura toute latitude pour choisir des dimensions correspondant à l'utilisation du dispositif dans un contexte précis, l'important étant que le dispositif ait les attributs d'un sac. On peu donner un exemple de dimensions offrant un bon compromis entre le volume intérieur du sac et la facilité d'utilisation de celui-ci. La longueur totale de la pièce inférieure 2 peut-être choisie à 280 cm et sa largeur à 120 cm. Les pièces latérales 3 ont une longueur de 120 cm et une hauteur de 50 cm, ce qui est également le cas du fond 5 du dispositif. Toujours dans l'exemple donné, la partie supérieure 4 du dispositif sera formé d'une pièce carrée de 120 cm par 120 cm.

On peut également réaliser la partie supérieure du dispositif et son fond, à savoir les pièces latérales 3, la pièce supérieure 4 et le fond 5 dans une seule pièce de toile prédécoupée de manière à n'avoir de coutures qu'entre les parois latérales 3 et la pièce inférieure 2, ainsi qu'entre le bord inférieur du fond 5 et la pièce inférieure 2. Cependant, la présence des coutures d'angle 6 est de nature à apporter également une certaine rigidité au dispositif, cet effet étant précisément recherché pour en faciliter l'utilisation.

Sur la figure 2, qui illustre la deuxième variante du dispositif selon l'invention, on retrouve le dispositif et ses éléments constitutifs, dont les repères ne sont pas indiqués. Par rapport à la variante illustrée à la figure 1, la différence réside dans le fait que l'une au moins des arêtes longitudinales supérieures du dispositif est pourvue d'une fermeture à glissière 10. Si, comme cela est illustré à la figure 2, on dispose une fermeture à glissière 10 sur chacune des deux arêtes longitudinales supérieures du dispositif, on peut, en ouvrant les deux glissières, rabattre totalement la pièce de toile supérieure 4 de manière à faciliter le vidage du dispositif. Les deux fermetures à glissière 10 peuvent également être prolongées le long des deux arêtes déterminant la jointure entre le fond 5 et les pièces latérales 3.

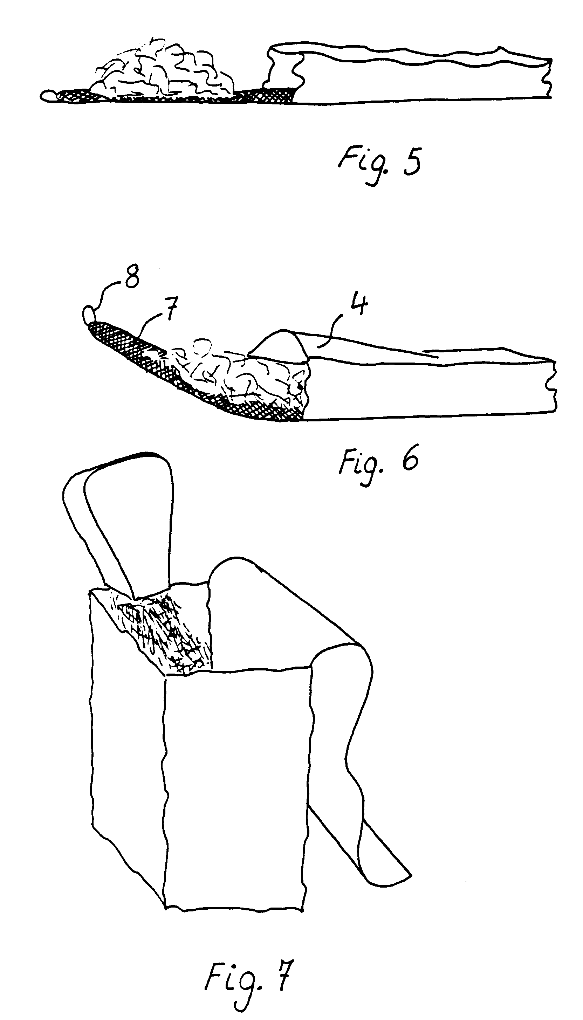

Sur la figure 5, on peut constater qu'un tas de déchets de jardin peut être amoncelé sur la partie rabattable 7 de la pièce inférieure 2. Une fois que le tas a atteint la taille voulue, le jardinier pourra soulever l'extrémité de la partie rabattable 7 au moyen de la poignée 8 qu'il pourra saisir d'une main. De l'autre main, il pourra légèrement soulever le bord de la pièce supérieure 4 afin d'ouvrir la bouche du sac et de permettre le glissement du tas de déchets à l'intérieur de celui-ci. Selon les dimensions que l'on aura choisies, une seule personne pourra exécuter cette opération, qui est facilitée comme on l'a dit par le fait que la surface de la pièce inférieure 2 est glissante sur ses deux côtés et que par conséquent le tas de déchets aura tendance à glisser tout naturellement à l'intérieur du sac. Si l'on réalise des dispositifs de grandes dimensions, il se peut que la distance séparant le bord de la pièce supérieure 4 de la poignée 8 ne permette pas à une seule personne d'exécuter la manoeuvre d'un seul coup. Cependant, le jardinier pourra commencer par soulever la pièce inférieure 2 au moyen de la poignée 8 de manière à amener la majeure partie du tas de déchets à proximité immédiate de la bouche du sac, puis il relèvera la pièce supérieure 4 et poussera le tas de déchets vers l'intérieur, à la main ou à l'aide d'un balais de jardin. Une fois qu'une partie du tas de déchets est introduite à l'intérieur de la bouche du sac et maintient celle-ci ouverte, il suffit de relever à nouveau la partie rabattable 7 au moyen de la poignée 8 pour que l'entier du tas de déchets glisse à l'intérieur du dispositif.

Sur la figure 7, on peut se rendre compte que le dispositif tient en quelque sorte debout par lui-même. En effet, grâce à la rigidité de la toile, accentuée par les coutures formant les arêtes du dispositif, il suffit que le dispositif contienne une certaine masse de déchets, afin d'asseoir sa base, et le dispositif a de lui-même tendance à rester ouvert. Cette particularité convient fort bien pour le vidage du bac collecteur d'une tondeuse à gazon, comme le montre la figure 7.

Sur la figure 4, qui correspond à la deuxième variante d'exécution, on peut voir que, grâce aux fermetures à glissière, la pièce supérieure du dispositif peut être rabattue de manière à faciliter le remplissage tout en conservant une certaine structure verticale aux deux pièces latérales et au fond.

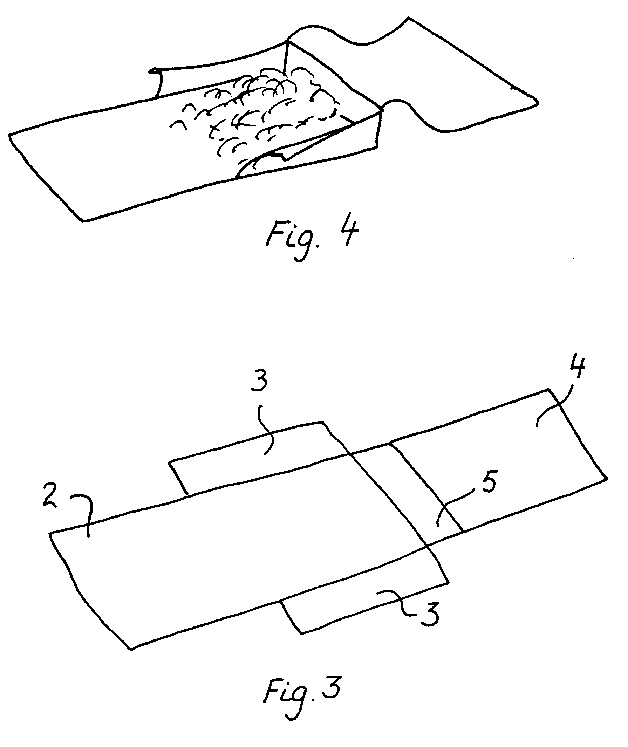

Sur la figure 3, qui porte sur la même variante que la figure 4, les glissières sont entièrement ouvertes, ce qui permet de déployer complètement le dispositif de sorte que toutes ses pièces reposent sur le sol. Cette configuration peut être utilisée par exemple s'il s'agit uniquement de déplacer un tas de déchets d'un endroit à l'autre d'une même pelouse, sans véritable transport.

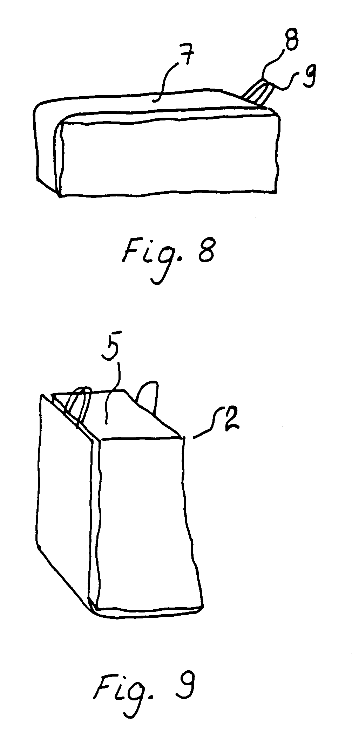

Sur la figure 8, on constate que la partie rabattable 7 a été rabattue au-dessus de la pièce supérieure 4 et que les deux poignées 8 et 9 sont mises en correspondance. La figure 8 permet de se rendre compte de l'une des raisons pour lesquelles la longueur totale de la pièce inférieure 2 est préférablement choisie pour correspondre au double de la longueur des pièces latérales, additionnée de la hauteur des dites pièces latérales. Dans cette configuration, le jardinier peut saisir ensemble les deux poignées 8 et 9 et traîner le dispositif sur le sol en ayant l'assurance que son contenu ne s'échappera pas. En fait, la longueur de la pièce inférieure 2 est légèrement inférieure au résultat du mode de calcul donné ci-dessus, cela de manière qu'il soit nécessaire d'exercer une certaine traction sur la poignée 8 pour mettre celle-ci en coïncidence avec la poignée 9, traction qui est utile pour plaquer la pièce inférieure 2 contre la bouche du sac et fermer celle-ci.

Finalement, à la figure 9, on peut constater que le dispositif une fois rempli et se présentant exactement dans la configuration illustrée à la figure 8 peut être relevé en position verticale. Il est également prévu de pourvoir l'arête marquant la jointure entre le fond 5 et la pièce inférieure 2 d'une poignée similaire aux deux poignées déjà mentionnées. De cette manière, le dispositif se présente comme une sorte de valise qui peut être manipulée et introduite par exemple dans le coffre d'une voiture.

Selon les dimensions que l'on aura choisies pour l'exécution du dispositif, il peut s'avérer utile de prévoir d'autres poignées que celles illustrées par exemple aux figures 8 et 9, notamment des poignées qui pourraient être cousues sur chacune des deux arêtes reliant le fond 5 du dispositif aux deux pièces latérales 3. D'une manière générale, on veillera cependant à ne pas disposer de poignée sur la surface inférieure de la pièce inférieure 2, cela de manière à ne pas entraver le glissement du dispositif sur le sol.

Comme on l'a dit d'emblée, le dispositif selon l'invention présente les divers avantages liés aux dispositifs déjà proposés selon l'art antérieur. Il s'agit en particulier d'un coût de fabrication extrêmement faible. En effet, les matériaux utilisés, tels que la toile ou tout autre matériau présentant les mêmes propriétés, sont fort répandus et bon marché. De plus, les quelques opérations de couture nécessaires à la réalisation du dispositif sont également des opérations bien connues pour lesquelles des équipements tout à fait adéquats existent.

Par rapport aux dispositifs proposés dans l'art antérieur, le dispositif selon l'invention présente également un avantage qui consiste dans le fait que seule la pièce inférieure 2 du dispositif doit préférablement être réalisée dans une toile dont la surface est glissante. La configuration proposée pour le dispositif selon l'invention permet d'utiliser pour les autres pièces du dispositif une toile d'une autre sorte, qui peut être d'un coût inférieur. Le dispositif selon l'invention présente l'avantage de pouvoir être aisément glissé sur le sol, notamment sur une pelouse comme c'était d'ailleurs le cas pour les dispositifs selon l'art antérieur, avec cette différence que la traction a lieu par la toile elle-même. Cependant, le dispositif selon l'invention présente l'avantage de pouvoir être halé non seulement en position ouverte, mais également en position fermée.

Le dispositif selon l'invention présente l'avantage unique de permettre un transport propre et pratique des déchets de jardin. En particulier, la configuration du dispositif selon l'invention permet de l'entreposer momentanément dans un véhicule et, comme le dispositif est alors refermé sur lui-même, le risque de voir une partie du contenu du dispositif s'échapper de celui-ci à l'intérieur du véhicule est limité à un strict minimum, cela en particulier si le dispositif est installé de manière que son fond repose sur la surface de chargement.

Un autre avantage du dispositif selon l'invention est que, grâce notamment au fait que les poignées peuvent être disposées sur les arêtes du fond du dispositif, il est extrêmement aisé de vider le dispositif. Cela est particulièrement vrai en ce qui concerne la deuxième variante d'exécution qui est exposée à la figure 2 car, grâce aux fermetures à glissière, il est possible de libérer entièrement le contenu du dispositif. Il convient encore de noter que pour l'opération de vidage du dispositif, le fait que la face supérieure de la pièce inférieure 2 soit également glissante permet aussi de rendre le vidage du dispositif plus aisé.

Enfin, le dispositif selon l'invention peut être utilisé comme emballage pour le transport et la vente de produits ayant des propriétés similaires à celles des déchets de jardin. Ainsi, on peut conditionner par exemple de la tourbe dans le dispositif selon l'invention et mettre ainsi ce produit dans le commerce en offrant à l'acheteur un emballage qu'il peut utiliser comme décrit plus haut, plutôt que de jeter ou détruire cet emballage. L'utilisation comme emballage ou conditionnement peut évidemment s'appliquer à une multitude de produits et ne se limite donc pas à la tourbe.

## Revendications

1. Dispositif pour le ramassage et/ou le transport de déchets de jardin ou de produits aux propriétés similaires, comportant une pièce inférieure (2) réalisée dans un matériau souple, mais non extensible, cette pièce étant destinée à glisser sur le sol, le dispositif comportant au moins deux autres pièces d'un matériau similaire à celui de la première, l'une des pièces précitées jouant le rôle de fond (5), les pièces étant rendues solidaires le long de leurs bords voisins de manière à former un sac, caractérisé par le fait que la longueur de la pièce inférieure (2) est plus grande que la profondeur du sac et par le fait que la pièce inférieure (2) est pourvue d'une poignée (8) sur son côté libre opposé au fond (5) et que le dispositif comporte, fixée le long de l'arête opposée à celle reliant le fond (5) à la pièce inférieure (2), une autre poignée (9) avec laquelle la première poignée (8) est destinée à être mise en regard et en coopération.

2. Dispositif selon la revendication 1, caractérisé par le fait qu'une poignée est fixée le long de l'arête reliant le fond (5) à la pièce inférieure (2).

3. Dispositif selon l'une des revendications précédentes, caractérisé par le fait que la longueur de la pièce inférieure (2) est comprise entre le double de la profondeur du sac et ce même double additionné de la largeur du fond (5).

4. Dispositif selon l'une des revendications précédentes, caractérisé en ce que la pièce inférieure (2) est réalisée dans un matériau moins rugueux que les autres pièces.

5. Dispositif selon l'une des revendications précédentes, caractérisé par le fait que l'une au moins des pièces du dispositif est réalisée en une toile de polypropylène tissé laminé.

6. Dispositif selon l'une des revendications précédentes, caractérisé par le fait que l'une au moins des pièces du dispositif est réalisée en une toile de polypropylène tissé laminé d'un poids supérieur à 100 grammes par mètre carré.

7. Dispositif selon la revendication 6, caractérisé en ce qu'au moins deux des pièces (2, 3, 4 et 5) du dispositif sont réalisées dans des matériaux qui diffèrent au moins par leur poids au mètre carré.

8. Dispositif selon l'une des revendications précédentes, caractérisé par le fait qu'au moins deux pièces ayant des bords voisins sont rendues solidaires par une fermeture à glissière fixée pour une part sur l'une des pièces et pour l'autre sur une autre pièce.

9. Dispositif selon la revendication 8, caractérisé par le fait que la pièce supérieure (4) est reliée aux deux pièces latérales (3) par des fermetures à glissière.

## Claims

1. A device for the gathering and/or transport of garden refuse or of products of similar characteristics, comprising a lower piece (2), made of a flexible but not extendible material, this piece being intended to slide on the ground, said device comprising at least two other pieces of a material similar to that one of the first piece, one of said mentioned pieces acting as a bottom (5), the pieces being joined to one another along their adjacent edges in such a way as to form a bag, characterised in that the length of the lower piece (2) is greater than the depth of the bag and in that the free end of the lower piece (2) that is opposed to the bottom (5) is provided with a grip (8) and in that said device comprises another grip (9) which the first grip (8) is intended to overlap and to cooperate with, said other grip (9) being secured along the edge that is opposed to the one joining the bottom (5) to the lower piece (2).

2. A device according to claim 1, characterised in that a grip is secured along the edge joining the bottom (5) to the lower piece (2).

3. A device according to anyone of the preceding claims, characterised in that the length of the lower piece (2) falls between double the depth of the bag and that same double plus the width of the bottom (5).

4. A device according to anyone of the preceding claims, characterised in that the lower piece (2) is made of a material less rough than the other pieces.

5. A device according to anyone of the preceding claims, characterised in that at least one of the pieces of the device is made of a laminated and woven polypropylene fabric.

6. A device according to anyone of the preceding claims, characterised in that at least one of the pieces of the device is made of a laminated woven polypropylene fabric, of a weight greater than 100 grams per square metre.

7. A device according to claim 6, characterised in that at least two of the pieces (2, 3, 4 and 5) of the device are made of materials which differ at least in their weight per square metre.

8. A device according to anyone of the preceding claims, characterised in that at least two pieces with adjacent edges are joined by a zip fastener secured on one side to one of the pieces, and, on the other, to the other piece.

9. A device according to claim 8, characterised in that the upper piece (4) is joined to two lateral pieces (3) by zip fasteners.

## Patentansprüche

1. Vorrichtung zum Sammeln und/oder Transportieren von Gartenabfällen oder Produkten mit ähnlichen Eigenschaften, die ein unteres Teil (2) aufweist aus einem weichen, jedoch nicht dehnbaren Material, wobei dieses Teil dazu dient, auf dem Boden zu gleiten und wobei die Vorrichtung wenigstens zwei andere Teile aufweist aus einem Material, das ähnlich demjenigen des ersten Teils ist, wobei eines dieser Teile das Bodenteil (5) darstellt und die Teile entlang ihrer benachbarten Ränder derart miteinander verbunden sind, dass sie einen Sack bilden, dadurch gekennzeichnet, dass die Länge des unteren Teils (2) grösser als die Tiefe des Sakkes ist und dass das untere Teil (2) mit einem Handgriff (8) an seiner freien Seite gegenuber dem Boden (5) versehen ist und dass die Vorrichtung einen weiteren Handgriff (9) aufweist der entlang der Kante befestigt ist, welche derjenigen gegenüberliegt, die den Boden (5) mit dem unteren Teil verbindet, so dass der erste Handgriff (8) diesem gegenüber gelegt werden kann und mit ihm zusammenwirkt.

2. Vorrichtung nach Anspruch 1, dadurch gekennzeichnet, dass ein Handgriff entlang der Kante angeordnet ist, welche den Boden (5) mit dem unteren Teil (2) verbindet.

3. Vorrichtung nach einem der vorhergehenden Ansprüche, dadurch gekennzeichnet, dass die Länge des unteren Teils (2) im Bereich zwischen dem Doppelten der Sacktiefe und dieser doppelten Tiefe vergrössert um die Breite des Bodens (8) liegt.

4. Vorrichtung nach einem der vorhergehenden Ansprüche, dadurch gekennzeichnet, dass das untere Teil (2) aus einem Material besteht, das eine geringere Rauhigkeit aufweist als die anderen Teile.

5. Vorrichtung nach einem der vorhergehenden Ansprüche, dadurch gekennzeichnet, dass wenigstens eines der Teile der Vorrichtung aus einer Bahn aus gewebtem laminierten Polypropylen besteht.

6. Vorrichtung nach einem der vorhergehenden Ansprüche, dadurch gekennzeichnet, dass wenigstens eines der Teile der Vorrichtung aus einer Bahn aus gewebtem laminierten Polypropylen mit einem Gewicht von mehr als 100 g/m² besteht.

7. Vorrichtung nach Anspruch 6, dadurch gekennzeichnet, dass wenigstens zwei der Teile (2, 3, 4 und 5) der Vorrichtung aus Materialien bestehen, die wenigstens ein unterschiedliches Gewicht pro Quadratmeter aufweisen.

8. Vorrichtung nach einem der vorhergehenden Ansprüche, dadurch gekennzeichnet, dass wenigstens zwei Teile mit benachbarten Rändern miteinander mittels eines Reissverschlusses verbunden sind, der einerseits an einem der Teile und andererseits am anderen Teil befestigt ist.

9. Vorrichtung nach Anspruch 8, dadurch gekennzeichnet, dass das obere Teil (4) mit den beiden Seitenteilen (3) über Reissverschlüsse verbunden ist.
